# EUROPEAN PATENT SPECIFICATION

(11) **EP 2 860 426 B1**
(45) Date of publication and mention of the grant of the patent: **25.04.2018**
(21) Application number: 14188528.5
(22) Date of filing: 10.10.2014
(51) Int. Cl.: F16H 47/04, F16H 37/04

(54) **Hydro-mechanical Transmission**
Hydrostatisches Leistungsverzweigungsgetriebe
Transmission hydrostatique à division de puissance

(30) Priority: 10.10.2013 NL 2011584
(43) Date of publication of application: 15.04.2015
(73) Proprietor: Vredo Beheer B.V., 6669 DJ Dodewaard (NL)
(72) Inventor: de Vree, Johannes, 6669 DJ Dodewaard (NL)
(74) Representative: Louwaard, Jan-Willem Paul

(56) References cited:
- DE-A1- 2 335 629
- DE-A1- 2 926 425
- US-A- 2 931 250
- US-A- 3 990 327
- US-A- 5 584 772

## Description

### FIELD OF THE INVENTION

The present invention relates to transmissions for transmitting rotary motion and, more particularly, to an output coupled power split transmission.

### BACKGROUND OF THE INVENTION

In a working machine, such as earth moving machinery, the internal combustion engine (ICE) supplies power for propelling the working machine in the forward and reverse directions. The ICE also supplies power for the actuation of all of the installed machine implements. A transmission is coupled to the engine and transmits power from the engine to the drive train to propel the working machine in the desired direction and speed.

The working machine operates at relatively low speeds and in cyclical work routines, thus there is a need to control speed precisely at low speeds and to adjust it infinitely throughout the full working range.

It is desirable to utilize a continuously variable transmission (CVT) and manage the transmission ratio to thereby save engine power for the actuation of the implements and also to provide a continuously variable power flow through the transmission to improve machine productivity.

Furthermore, CVTs provide stepless shifting in working machine operation, allowing the engine to operate at an optimal speed range. This results in lower fuel consumption or lower emissions than the fuel consumption or emissions of a conventional transmission. However, typical CVTs suffer from lower efficiency or lower torque handling capabilities than conventional transmissions.

It would therefore be advantageous to combine the variability of the CVT with the efficiency of a mechanical transmission, to provide potential benefits for off road vehicles specifically. These so-called power split drives are known, but the technology is still in development.

In a power shift drive, a planetary gear set is combined with a mechanical stepped path resulting in the coupling of a continuous variable speed control with a simultaneous high efficiency level from the mechanical gears, see for instance US-A-3990327. Unfortunately, known power shift drives capable of meeting speed and torque requirements suffer from high complexity and cost.

The present invention is directed to overcoming one or more of the problems as set forth above.

### SUMMARY OF THE INVENTION

The present invention is directed toward a transmission comprising:
- a transmission case;
- a first planetary gear mechanism arranged in the transmission case and comprising a sun gear, a planet gear set, and a ring gear;
- a transmission input shaft connected to the first planetary gear mechanism and connectable to an external power source for driving the planetary gear mechanism;
- at least one transmission output shaft connected to the first planetary gear mechanism and connectable to an external device for driving said external device;
- at least one first hydrostat arranged externally on the transmission case and connected to the first planetary gear mechanism via a pump input shaft and configured to act as a unidirectional variable displacement pump driven by the planetary gear mechanism;
- at least one second hydrostat arranged externally on the transmission case, driven by the first hydrostat, and configured to act as a unidirectional motor and connected to the planetary gear mechanism via a motor output shaft for driving the first planetary gear mechanism;
wherein each of said transmission input shaft, said first hydrostat and said second hydrostat is connected to a respective one of said sun gear, said planet gear set, and said ring gear;
wherein said transmission output shaft is connected to the one of said sun gear, said planet gear set, and said ring gear to which the second hydrostat is connected;
wherein the first hydrostat and the second hydrostat are separate devices each having its own case arranged externally on the transmission case, and are connected via a hydraulic circuit that is configured for unidirectional flow of hydraulic oil between the first hydrostat and the second hydrostat.

The above described setup of the transmission according to the invention provides an output coupled power split transmission of a simple design, that is flexible in application, and that is cost efficient.

The application of a transmission case having arranged therein the mechanical drive components in combination with externally arranged hydrostats results in a simple design itself relative to known power split transmissions having mechanical components and hydrostats integrated in a single transmission case. Additionally, the application of hydrostats that act as a unidirectional variable displacement pump and a unidirectional motor, respectively, allows for the use of hydrostats and a hydraulic circuit of a simple design relative to known power split transmissions in which hydrostats act as bidirectional displacement pump and/or bidirectional motor, and relative to known power split transmissions in which a hydrostat serving as a pump and a hydrostat serving as a motor are integrated in a single unit.

Furthermore, the transmission according to the invention allows for easy and cost efficient adaptation of a given design of the transmission casing and the mechanical components arranged therein to a specific application. A standard design of the transmission casing and the mechanical components arranged therein can be easily and cost efficiently be adapted to a specific application by arranging thereon a combination of (a) specific hydrostat(s) to act as a pump and (a) specific hydrostat(s) to act as a motor. To this adds that hydrostats that can act as a unidirectional variable displacement pump and hydrostats that can act as a unidirectional variable displacement motor are readily available in the market and as a result thereof the choice of different units is great and the costs are relatively low.

Despite the simple design of the transmission according to the invention relative to known power split transmissions, the transmission according to the invention makes way to a number of advantageous developments, which will be described herein below.

According to an advantageous development the second hydrostat is configured to act as a unidirectional variable displacement motor. The application of a hydrostat that is configured to act as a unidirectional variable displacement motor has the advantage over the application of a unidirectional fixed displacement motor, that the rotational speed range at which the motor input shaft can be driven hydraulically is increased. Furthermore, the application of a hydrostat that is configured to act as a unidirectional variable displacement motor allows for a further advantageous development wherein the first hydrostat, the second hydrostat, and the hydraulic circuit connecting the first hydrostat and second hydrostat are configured such that in case the first hydrostat is set to maximum displacement volume and the second hydrostat is set to zero displacement volume, the first hydrostat is stopped. The features according to this further development make it possible to set the transmission in a full mechanical mode of operation in which no power is transferred via the hydrostats. This has the advantage over known power split transmissions in which power is transmitted via the hydrostats in all operating modes, that the efficiency of the transmission is increased, in particular since a full mechanical operating mode is more efficient that a full hydraulic operating mode and than a partly hydraulic / partly mechanical operating mode.

According to a further advantageous development the first hydrostat and the second hydrostat are both axial plunger units of the bent axis type.

Hydrostat units of the axial plunger type are widely available as a single unit that can be arranged on the transmission case of a transmission according to the invention, and are relatively compact. Axial plunger units of the bent axis type have the advantage over axial plunger units of the swash plate type, that axial plunger units of the bent axis type allow for greater tilt angles. Presently, axial plunger units of the swash plate type that are widely available on the market have a maximum tilt angle of 32°, while axial plunger units of the bent axis type that are widely available on the market have a maximum tilt angle of 45°. Having greater tilt angles allows for a larger rotational speed range of the motor input shaft of the transmission according to the invention from maximum amount of power that is transmitted via the hydrostats to the motor input shaft to minimum amount of power that is transmitted via the hydrostats to the motor input shaft. This has the advantage that the rotational speed range of the transmission output shaft can be achieved without providing a stepped gear mechanism or by providing a stepped gear mechanism with less gear ratios. By embodying both the first hydrostat and the second hydrostat as axial plunger units of the bent axis type a particular large rotational speed range of the motor input shaft from maximum amount of power that is transmitted via the hydrostats to the motor input shaft to minimum amount of power that is transmitted via the hydrostats to the motor input shaft, can be achieved with hydrostat units that are widely available in the market.

Furthermore, hydrostats of the axial plunger bent axis type are generally suitable for providing the development as described herein above wherein a full mechanical mode of operation is achieved by stopping the first hydrostat by setting the first hydrostat to maximum displacement and the second hydrostat to minimum displacement, while hydrostats of the axial plunger swash plate type are not.

In a preferred embodiment of the transmission according to the invention, in particular in which the first hydrostat and the second hydrostat are axial plunger units of the bent axis type, the first hydrostat and the second hydrostat are both hydraulic motor units, wherein the first hydrostat is a hydraulic motor unit converted to act as a unidirectional variable displacement pump.

Hydrostat units of the axial plunger bent axis type are widely available in the market that are built either as a hydraulic pump unit or a hydraulic motor unit. Most hydraulic pump units of the axial plunger type that are available on the market are of the swash plate type, while most available hydraulic motor units of the axial plunger type that are available on the market are of the bent axis type. By converting a hydraulic motor unit of the axial plunger bent axis type to act as a unidirectional variable displacement pump, in stead of less available hydraulic pump units of the axial plunger bent axis type a more available hydraulic motor unit of the axial plunger bent axis type can be chosen for the first hydrostat of the transmission according to the invention. This has the advantage that the choice of units of different specifications for the first hydrostat is great and the costs are relatively low. Hydraulic motor unit of the axial plunger bent axis type can generally easily be converted to act as a hydraulic pump, in particular by setting its initial tilt-angle from maximum angle to minimum tilt-angle.

Furthermore, the widely available motor units of the bent axis type are generally suitable for providing the development as described herein above wherein a full mechanical mode of operation is achieved by stopping the first hydrostat by setting the first hydrostat to maximum displacement and the second hydrostat to minimum displacement, while the widely available plunger pump units are not.

According to a further advantageous development of the transmission according to the invention the transmission further comprises an electronic hydrostat control system that is configured for determining and adjusting the displacement of each variable displacement hydrostat individually.

In order for a power-split transmission with multiple variable displacement hydrostats to function properly, the displacement settings of the individual hydrostats have to be geared to one another. In known power-split transmissions mechanical displacement adjustment mechanisms are provided by means of which the displacement settings of individual variable displacement hydrostats are mechanically coupled. The electronic hydrostat control system according to this development provides more flexibility in adjusting the displacement settings of the individual hydrostats. Individually controlling the hydrostats by means of an electronic hydrostat control system makes it possible to adapt the control of the individual hydrostats relatively easy to a specific choice of hydrostats when assembling a transmission according to the invention out of a standard design of the transmission casing and the mechanical components arranged therein and a combination of (a) specific hydrostat(s) to act as a pump and (a) specific hydrostat(s) to act as a motor. Furthermore, individually controlling the hydrostats by means of an electronic hydrostat control system makes it possible to easily adjust the displacement settings of the individual hydrostats in response to changing operating conditions when operating the transmission. This makes it possible to optimize the efficiency of the hydraulic power transmission for specific operating conditions.

In combination with the advantageous development according to which the first hydrostat and the second hydrostat are of the axial plunger bent axis type, the electronic hydrostat control system preferably comprises for each variable displacement hydrostat an angle sensor for measuring the tilt-angle of the respective variable displacement hydrostat.

According to a further advantageous development the shafts extend in a longitudinal direction, and in a direction perpendicular to said longitudinal direction the pump input shaft and the motor output shaft are arranged on opposite sides of the transmission input shaft.

The features according to this development make it possible to arrange the first hydrostat and second hydrostat on the transmission case on either side of the transmission input shaft. This has the advantage that use is made of the space on both sides of the transmission input shaft that is available between the transmission case and the external power source to which the transmission is connected via the transmission input shaft.

In an advantageous embodiment thereof the transmission output shaft is connected to the planetary gear mechanism via the motor output shaft, and in said direction perpendicular to the longitudinal direction the transmission input shaft and the transmission output shaft are arranged on opposite sides of the motor output shaft.

These features make it possible to arrange the second hydrostat on the transmission case in between the transmission input shaft and the transmission output shaft. This has the advantage that use is made of the space in between the transmission input shaft and the transmission output shaft. The latter is in particular advantageous in configurations in which the distance between the transmission input shaft and transmission output shaft has to be relatively big to allow a drive shaft that is connected to the transmission output shaft to extend along the power source to which the transmission is connected via the transmission input shaft.

According to a further advantageous development of the transmission according to the invention the transmission output shaft is connected to the first planetary gear mechanism via a directional mechanism for changing the direction of rotation of the transmission output shaft.

The features according to this development make it possible to reverse the direction of rotation of the transmission output shaft without reversing the direction of rotation of the hydrostats and the first planetary gear mechanism. This has the advantage that the simple design of the power split transmission according to the invention with
hydrostats serving as unidirectional variable displacement pump and unidirectional variable displacement motor, respectively, can be used in applications wherein the external device driven by the transmission output shaft requires that the direction of rotation of the transmission output shaft can be changed. Furthermore, in combination with the development described herein above wherein the first hydrostat and the second hydrostat can be stopped for providing a full mechanical mode of operation, the feature of the transmission output shaft being connected to the first planetary gear mechanism via a directional mechanism provides a full mechanical mode of operation in both rotational directions of the transmission output shaft.

According to a further advantageous development of the transmission according to the invention the transmission output shaft is connected to the first planetary gear mechanism via a stepped gear mechanism configured to provide at least two gear ratios.

The features according to this development make it possible to change the rotational speed of the transmission output shaft without changing the rotational speed of the hydrostats and the first planetary gear mechanism.

Furthermore, the stepped gear mechanism allows the operation of the transmission in at least two operating ranges, each operating range associated with a respective one of the gear ratios provided by the stepped gear mechanism. In a preferred embodiment of the transmission according to the invention, to allow operation in at least two operating ranges with the first hydrostat acting as a unidirectional pump in each operating range, the second hydrostat acting as a unidirectional motor in each operating range, and a unidirectional flow of hydraulic oil between the hydrostats in each operating range, the direction of rotation of the pump input shaft is the same in each operating range and the direction of rotation of the motor output shaft is the same in each operating range. To switch between the operating ranges, the transmission output shaft is uncoupled from the motor output shaft and the pump input shaft, the stepped gear mechanism is switched from a first gear ratio to a second gear ratio, and the displacement of each variable displacement hydrostat is adjusted in order to change the rotational speed of the pump input shaft and the rotational speed of the motor output shaft. After switching the stepped gear mechanism from a first gear ratio to a second gear ratio and adjusting the displacement of each variable displacement hydrostat, the transmission output shaft is again coupled to the motor output shaft and the pump input shaft. The coupling and uncoupling of the transmission output shaft to/from the motor output shaft and the pump input shaft is preferably done by means of at least one clutch of the stepped gear mechanism. The switching between the operating ranges is preferably controlled by the electronic hydrostat control system described herein above.

For both the development of the directional mechanism and the development of the stepped gear mechanism applies that by connecting the transmission output shaft to the first planetary gear mechanism via these mechanisms, these mechanisms can be embodied as modules that can be added to the transmission according to the invention without adapting the arrangement described herein above of the hydrostats and first planetary gear mechanism. This has the advantage that a given design of the transmission casing and the mechanical components arranged therein can be easily and cost efficiently be adapted to a specific application by adding a directional mechanism and/or a stepped gear mechanism as a module. In particular by connecting the directional mechanism and the stepped gear mechanism to the first planetary gear mechanism via the motor output shaft, the directional mechanism and the stepped gear mechanism are mechanically separated from the first planetary gear mechanism, i.e. are not integrated in the first planetary gear mechanism, allowing the directional mechanism and the stepped gear mechanism to be embodied as modules that can be added to the transmission according to the invention without adapting the arrangement described herein above of the hydrostats and first planetary gear mechanism.

According to a further advantageous development of the transmission according to the invention the transmission output shaft is connected to the first planetary gear mechanism via a second planetary gear mechanism arranged in the transmission case and at least one clutch.

The features according to this development make it possible to provide the herein above described directional mechanism and/or stepped gear mechanism in a compact, modular configuration. Both the directional mechanism and the stepped gear mechanism can be embodied by means of a planetary gear mechanism and at least one clutch. A planetary gear mechanism is arranged about a central rotational axis. Since planetary gear mechanisms are compact and can be designed with different configurations but with the same central rotational axis, a planetary gear mechanism can relatively easy be implemented in or on a transmission casing as a module.

According to an advantageous embodiment of the above described development according to which the transmission output shaft is connected to the first planetary gear mechanism via a second planetary gear mechanism arranged in the transmission case and at least one clutch, the second planetary gear mechanism comprises a sun gear, a planet gear set, and a ring gear, wherein:
- the sun gear is connected to the first planetary gear mechanism;
- the planet gear set is connected to the transmission output shaft via a first clutch and to the transmission casing via a second clutch;
- the ring gear is connected to the transmission output shaft via a third clutch and to the transmission casing via a fourth clutch.

This embodiment provides both a directional mechanism and a stepped gear mechanism providing a low gearing and a high gearing.

According to a further advantageous development of the transmission according to the invention, the transmission comprises a first transmission output shaft and a second transmission output shaft, wherein the first transmission output shaft and the second transmission output shaft are connected to the first planetary gear mechanism via a differential gear mechanism.

The features according to this development make it possible to drive two external devices with a rotational speed differential, for instance a front wheel drive mechanism and rear wheel drive mechanism of a vehicle. Preferably the differential mechanism is a lockable differential gear mechanism.

According to an advantageous embodiment the differential gear mechanism is embodied as a modular unit. This has the advantage that a given design of the transmission casing and the mechanical components arranged therein can be easily and cost efficiently be adapted to a specific application by adding a differential gear mechanism as a module.

According to a further advantageous embodiment the differential gear mechanism comprises a third planetary gear mechanism. A planetary gear mechanism allows for a compact embodiment of a differential that can relatively easy be implemented in a transmission casing as a module.

According to a further advantageous development of the transmission according to the invention, the transmission further comprises a third hydrostat configured to act as a bidirectional variable displacement motor, which third hydrostat is connected to the first hydrostat via a directional control valve for changing the direction of rotation of the third hydrostat.

The features according to this development make it possible to drive an additional external device hydraulically by means of the first hydrostat.

According to a further advantageous development of the transmission according to the invention, the transmission further comprising at least one auxiliary transmission output shaft connected to the one of said sun gear, said planet gear set, and said ring gear to which the transmission input shaft is connected.

The features according to this development make it possible to arrange additional hydrostats as hydraulic pumps on the transmission case for driving additional external devices.

### BRIEF DESCRIPTION OF THE DRAWING

The accompanying drawing is used to illustrate present non-limitative preferred exemplary embodiments of the present invention. The above stated and other advantages, features and objectives of the invention will become more apparent, and the invention better understood, from the following detailed description when read in combination with the accompanying drawing, in which:
Figures 1 to 9 schematically show embodiments of a transmission according to the invention;
Figures 10 to 12 show a side view, rear view, and front view of a transmission according to the embodiment shown schematically in figure 7.

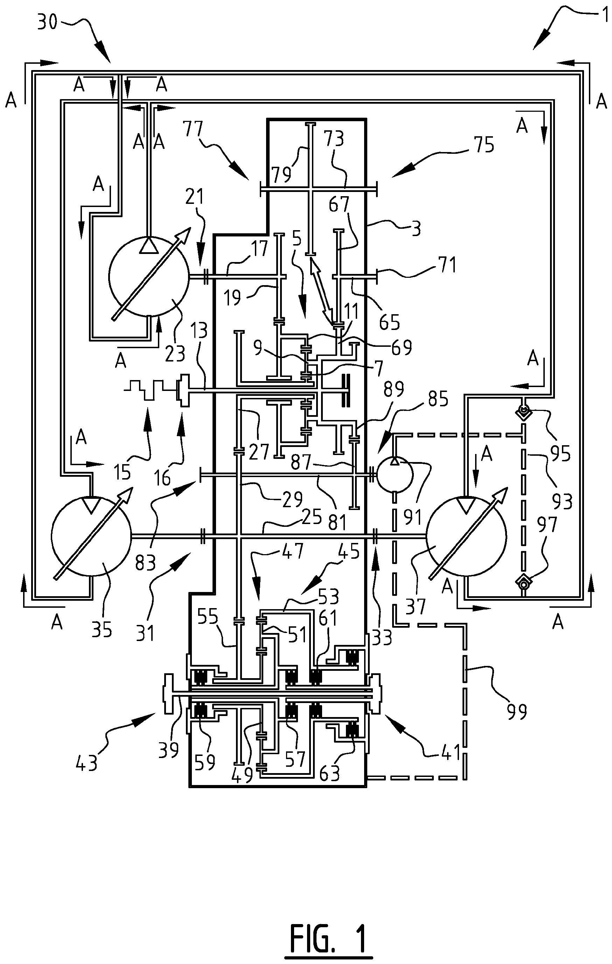

In figure 1 a transmission according to the invention is schematically shown.

The transmission 1 has a transmission case 3 that is schematically show with a line. In the transmission case 3 a first planetary gear mechanism 5 is arranged. The first planetary gear mechanism 5 has a sun gear 7, a planet gear set 9, and a ring gear 11. A transmission input shaft 13 is coupled to the planet gear set 9 and is coupled at one end thereof to an external power source 15, for instance an engine of a vehicle, by means of a coupling 16. The external power source 15 drives the planet gear set 9.

The ring gear 11 of the first planetary gear mechanism 5 is mechanically coupled to a hydraulic pump input shaft 17 via toothed wheel 19. The hydraulic pump input shaft 17 extends with one end thereof through the transmission case 3 and is mechanically coupled via an external coupling 21 to a first hydrostat 23. As shown schematically by its symbol, the first hydrostat 23 is configured to act as a unidirectional variable displacement pump.

The sun gear 7 of the first planetary gear mechanism 5 is mechanically coupled to a hydraulic motor input shaft 25 via toothed wheel 27 and toothed wheel 29. The hydraulic motor input shaft 25 extends at both ends thereof through the transmission case 3 and is at each end thereof mechanically coupled via an external coupling 31, 33 to a second hydrostat 35, 37. As shown schematically by their symbol, the second hydrostats 35, 37 are configured to act as a unidirectional variable displacement motor.

The first hydrostat 23 is hydraulically coupled to the two second hydrostats 35, 37 via a hydraulic circuit 30, in particular, a closed hydraulic circuit, in which the hydraulic oil flow is in one direction, in particular in direction of arrow A.

The transmission 1 has a transmission output shaft 39 that is connected to the first planetary gear mechanism 5 via the motor input shaft 25. The transmission output shaft 39 extends at both ends thereof through the transmission case 3 and is at each end thereof provided with a coupling member 41, 43 for mechanically coupling the transmission output shaft 39 to an external device to be driven.

The transmission output shaft 39 is coupled to the motor output shaft 25 and first planetary gear mechanism 5 by means of toothed wheel 29, and a combined stepped gear / directional mechanism 45.

The combined stepped gear / directional mechanism 45 has a second planetary gear mechanism 47. The second planetary gear mechanism 47 has a sun gear 49, a planet gear set 51, and a ring gear 53. The sun gear 49 is coupled to the first planetary gear mechanism 5 and motor input shaft 25 by means of toothed wheel 55. The planet gear set 51 is coupled to the transmission output shaft 39 by means of a first clutch 57 and is coupled to the transmission casing 3 via a second clutch 59. The ring gear 53 is coupled to the transmission output shaft 39 by means of a third clutch 61 and to the transmission casing 3 by means of a fourth clutch 63. With this arrangement of second planetary gear mechanism 47 and clutches 57, 59, 61, and 63, a high gearing, a low gearing, and a reverse can be achieved according to the scheme as shown in table 1:

**Table 1**

| 1st clutch | 2nd clutch | 3rd clutch | 4th clutch | Mode |
|---|---|---|---|---|
| Coupled | Uncoupled | Coupled | Uncoupled | High gearing |
| Coupled | Uncoupled | Uncoupled | Coupled | Low gearing |
| Uncoupled | Coupled | Coupled | Uncoupled | Reverse |

The transmission 1 is further shown with three auxiliary output shafts.

The first auxiliary output shaft 65 is coupled at one end thereof by means of toothed wheel 67 and toothed wheel 69 to transmission input shaft 13, and extends with the other end thereof through the transmission case 3 where it is provided with an external coupling member 71 for mechanically coupling an external auxiliary device to the first auxiliary output shaft 65.

The second auxiliary output shaft 73 extends with both ends thereof through the transmission case 3 and is at both ends thereof provided with an external coupling member 75, 77 for mechanically coupling an external auxiliary device to the second auxiliary output shaft 73. The second auxiliary output shaft 73 is coupled by means of toothed wheel 79 and toothed wheel 69 to transmission input shaft 13.

The third auxiliary output shaft 81 extends with both ends thereof through the transmission case 3 and is at both ends thereof provided with an external coupling member 83, 85. The third auxiliary output shaft 81 is coupled by means of toothed wheel 87 and toothed wheel 89 to transmission input shaft 13. In figure 1 an oil pump 91 is coupled to the third auxiliary output shaft 81. The oil pump 91 is connected by means of oil lines 93 and valves 95, 97 to the hydraulic circuit 30 for filling the hydraulic circuit 30. The oil pump 91 is further connected by means of oil lines 99 to a circuit (not shown) of oil lines in the transmission casing 3 for providing oil pressure for lubricating the mechanical components arranged in the transmission case 3.

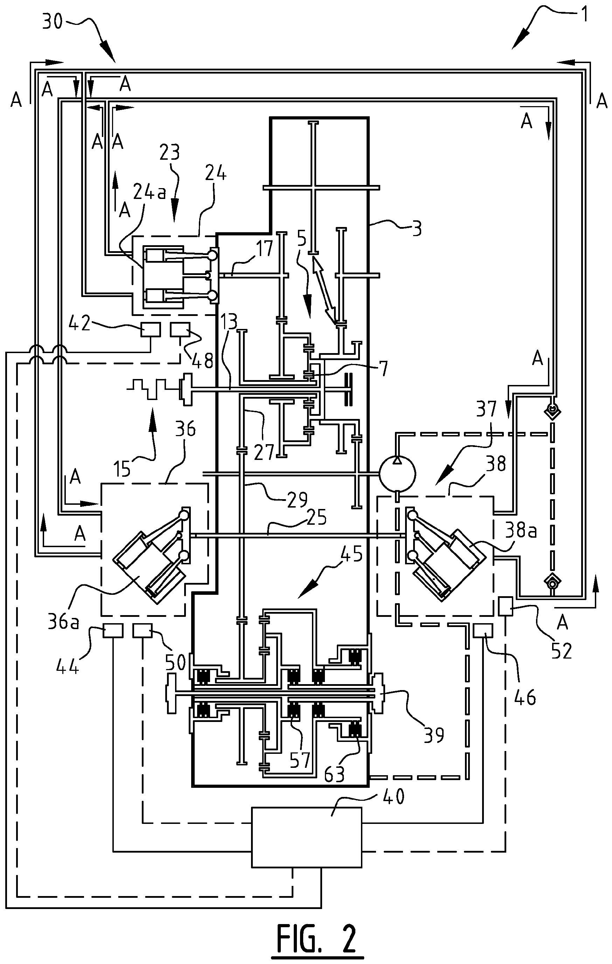

In figure 2 is schematically shown that the first hydrostat 23 is embodied by a first hydrostat unit 24 of the axial plunger bent axis type. The second hydrostats 35, 37 are embodied by a second hydrostat unit 36 of the axial plunger bent axis type and a second hydrostat unit 38 of the axial plunger bent axis type, respectively. The first hydrostat unit 24 and the second hydrostat units 36, 38 are three separate units that are arranged externally on the transmission case 3. A single hydrostat unit can be exchanged for a hydrostat unit with different specifications to adapt the transmission 1 to a specific application. Since only one hydraulic pump and one hydraulic motor is required for the transmission 1 to function as a power split transmission, one of the second hydrostat units 36, 38 is optional. Such exchange of hydrostat units does not require alteration of the mechanical components that are arranged in the transmission case 3.

The displacement of the first hydrostat unit 24 and second hydrostat units 36, 38 can be set individually by means of a hydrostat control device 40. The hydrostat units 24, 36, and 38 are each provided with a sensor 42, 44, 46 for determining the set displacement of the respective hydrostat unit and with an actuator 48, 50, 52 for setting the displacement of the respective hydrostat unit. Each sensor 42, 44, 46 is connected to the hydrostat control device 40 for providing the hydrostat control device 40 with information related to the set displacement of the respective hydrostat unit. Each actuator 48, 50, 52 is connected to the hydrostat control device 40 such that the hydrostat control device 40 can set the displacement of each of the hydrostat units by means of the respective actuator. In the shown embodiment wherein the hydrostat units 24, 36, 38 are of the axial plunger bent axis type, the sensor, preferably an electronic angle sensor, is configured for measuring the tilt-angle of the head 24a , 36a, and 38a, as a measure for the set displacement of the hydrostat unit, and the actuator is configured for setting the tilt-angle of the head 24a, 36a, and 38a.

By setting the displacement of the respective hydrostat units, the hydrostat control device 40 controls the amount of power delivered by the external power source 15 via the transmission input shaft 17 that is transferred to the motor output shaft 25 hydraulically by means of the first hydrostat unit 24 and second hydrostat units 36, 38, and the amount of power delivered by the external power source 15 via the transmission input shaft 17 that is transferred to the motor output shaft 25 mechanically via sun gear 7, toothed wheel 27 and toothed wheel 29.

In figure 2 the heads 24a, 36a, and 38a are shown in their initial position. As shown in the initial position of the head 24a of hydrostat unit 24 its tilt-angle is 0°. In this initial position the hydrostat unit 24, which serves a unidirectional variable displacement pump 23, is set to zero displacement. With the displacement of hydrostat unit 24 set to zero displacement, the pump input shaft 17 can rotate freely and there is no flow of oil in the hydraulic circuit 30.

As shown in the initial position of the heads 36a and 38a of second hydrostat units 36, 38 their tilt-angle is 45°. In this initial position the second hydrostat units 36, 38, which serves a unidirectional variable displacement motor 35, 37, is set to maximum displacement. Since there is no flow of oil in the hydraulic circuit 30, the second hydrostat units 36, 38 are not driven. Consequently, no power available from the external power source 15 is transferred hydraulically to the motor output shaft 25. Furthermore, since the pump input shaft 17 can rotate freely and due to the operating principle of the first planetary gear mechanism 5, no power available from the external power source 15 is transferred mechanically via the sungear 7 to the motor output shaft 25. In this initial situation no power is transferred to the transmission output shaft 39.

By increasing the tilt-angle of the head 24a of first hydrostat unit 24, the first hydrostat unit 24 starts the flow of oil in the hydraulic circuit 30 in the direction of arrow A. As a result thereof the hydrostat units 36, 38 are driven and power is transferred hydraulically to the motor output shaft 25. Additionally, the pump input shaft 17 can no longer rotate freely, which results due to the operating principle of the first planetary gear mechanism 5 in power transfer mechanically via the sun gear 7 to the motor output shaft 25. With the combined stepped gear / directional mechanism 45 set in low gearing, in particular by engaging the first clutch 57 and the fourth clutch 63, the power that is transferred to the motor output shaft 25 is transferred to the transmission output shaft 39, such that a vehicle having driven axles coupled to the transmission output shaft 39 starts to ride.

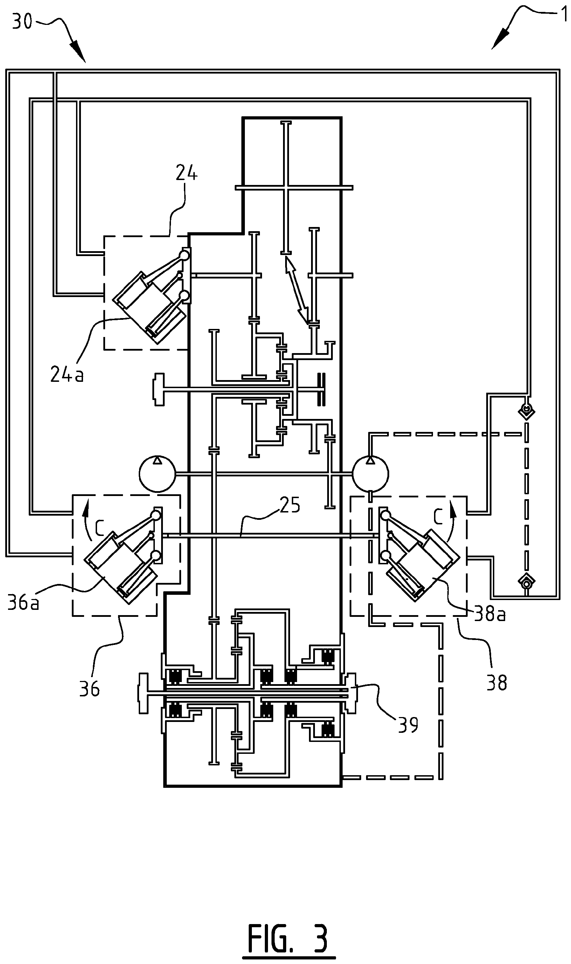

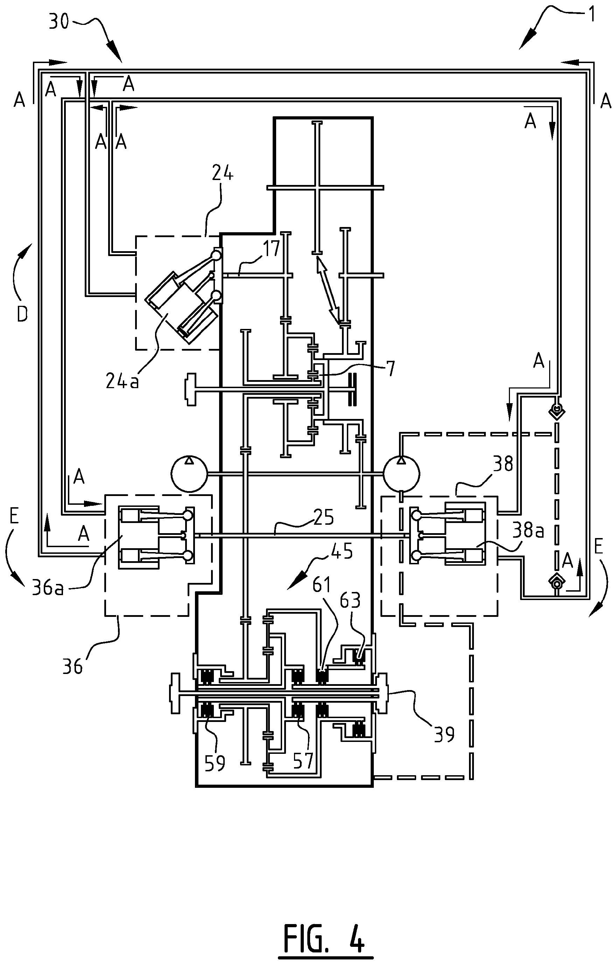

The tilt-angle of the head 24a of first hydrostat unit 24 can be increased gradually in the direction of arrow B until its maximum tilt-angle of 45° is reached, which corresponds to maximum displacement of the first hydrostat unit 24. That situation is shown in figure 3. Subsequently the tilt-angle of the heads 36a, 38a of the second hydrostat units 36, 38 can be gradually decreased gradually in the direction of arrow C until their minimum tilt-angle of 0° is reached, which corresponds to zero displacement of the second hydrostat units 36, 38. That situation is shown in figure 4. In this process of gradually increasing the tilt-angle of the head 24a of first hydrostat unit 24 until its maximum tilt-angle and gradually decreasing the tilt-angle of the heads 36a, 38a of the second hydrostat units 36, 38 until their minimum tilt-angle the rotational speed of the motor output shaft 25 is gradually increased and the amount of power that is transferred mechanically to the motor output shaft 25 is gradually increased. Furthermore, as a result of the gradual increase of the rotational speed of the motor output shaft 25, the rotational speed of the transmission output shaft 39 and therewith the speed of the vehicle is gradually increased.

Once the second hydrostat units 36, 38 are set to zero displacement as shown in figure 4, the oil can no longer flow in the hydraulic circuit 30, while the motor input shaft 25 can still rotate. Since the first hydrostat unit 24 is set to maximum displacement and the oil can no longer flow in the hydraulic circuit 30, the first hydrostat unit 24 is stopped, such that pump input shaft 17 is stopped. As a result thereof and due to the operating principle of the first planetary gear mechanism 5 power is only transferred mechanically via the sun gear 7 to the motor output shaft 25. In this situation the transmission operates in full mechanical mode.

In order to subsequently switch from low gearing to high gearing, first the first clutch 57 and the fourth clutch 63 are uncoupled such that all four clutches 57, 59, 61, and 63 of the combined stepped gear / directional mechanism 45 are uncoupled. As a result the transmission output shaft 39 is no longer coupled to the motor input shaft 25. Subsequently, the tilt-angle of the head 24a of the first hydrostat unit 24 is decreased in the direction of arrow D and the tilt-angles of the heads 36a, 38a of the second hydrostat units 36, 38 are increased in the direction of arrows E, such that oil starts to flow again in the hydraulic circuit 30 in the direction of arrow A and pump input shaft 17 starts to rotate again. The hydrostat control unit 40 then calculates the rotational speed of the motor input shaft 25 that matches the present rotational speed of the transmission output shaft 39 with the combined stepped gear / directional mechanism 45 in its high gearing, and sets the respective tilt-angles of the heads 24a, 36a, and 38a, of the hydrostat units 24, 36, and 38 on the basis of the rotational speed of the transmission input shaft 13 to such a value that the motor input shaft 25 rotates at the calculated rotational speed. Subsequently the combined stepped gear / directional mechanism 45 can be set in its high gearing by engaging the first clutch 57 and the third clutch 61. Once the high gearing is set, the process of increasing the tilt-angle of the head 24a of the first hydrostat unit 24 and of decreasing the tilt-angle of the heads 36a, 38a of the second hydrostat units 36, 38 as described herein above is repeated, such that the rotational speed of the transmission output shaft 39 and therewith the speed of the vehicle is further increased.

In the above described process of increasing the speed of a vehicle in steps by first making use of the low gearing and subsequently making use of the high gearing, the oil flow in the hydraulic circuit 30 is unidirectional and the hydrostats are operated unidirectional.

The transmission 1 as shown in figure 1 can relatively easily be adapted to a specific application by adding optional modular units thereto.

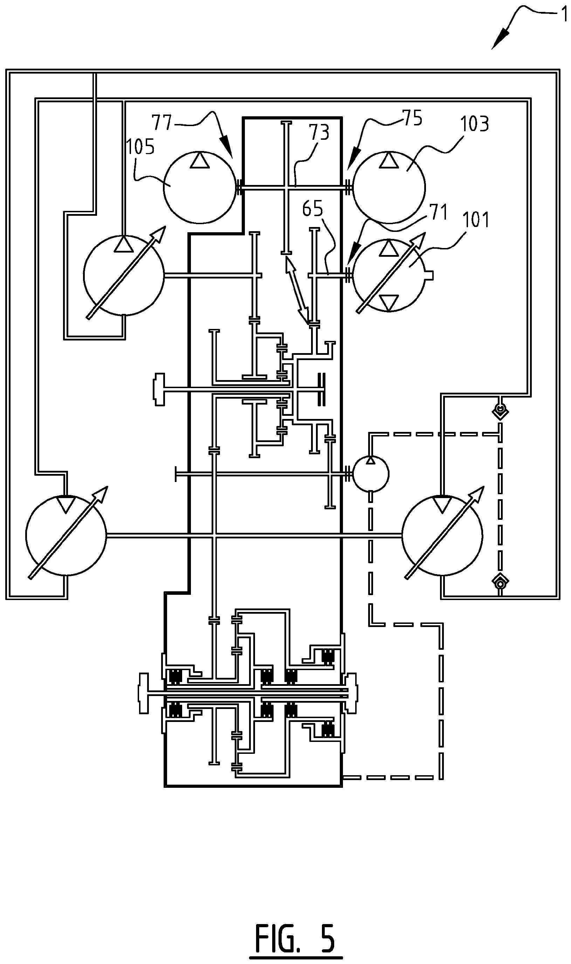

In figure 5 the transmission 1 of figure 1 is shown wherein additionally auxiliary hydrostat units 101, 103, and 105 are arranged externally on the transmission case 3, which are each mechanically coupled to a respective coupling member 71, 75, 77, of the first and second auxiliary output shafts 65, 73. The hydrostat units 103 and 105 are configured to act as unidirectional fixed displacement pumps. The hydrostat unit 101 is configured to act as bidirectional variable displacement pump.

The additional auxiliary hydrostat units 101, 103, and 105 are three separate units that are arranged externally on the transmission case 3. The additional auxiliary hydrostat units 101, 103, and 105, are modular units that can be added to or removed from the transmission 1 to adapt the transmission 1 to a specific application. Such addition or removal does not require alteration of the mechanical components that are arranged in the transmission case 3 as shown in figure 1.

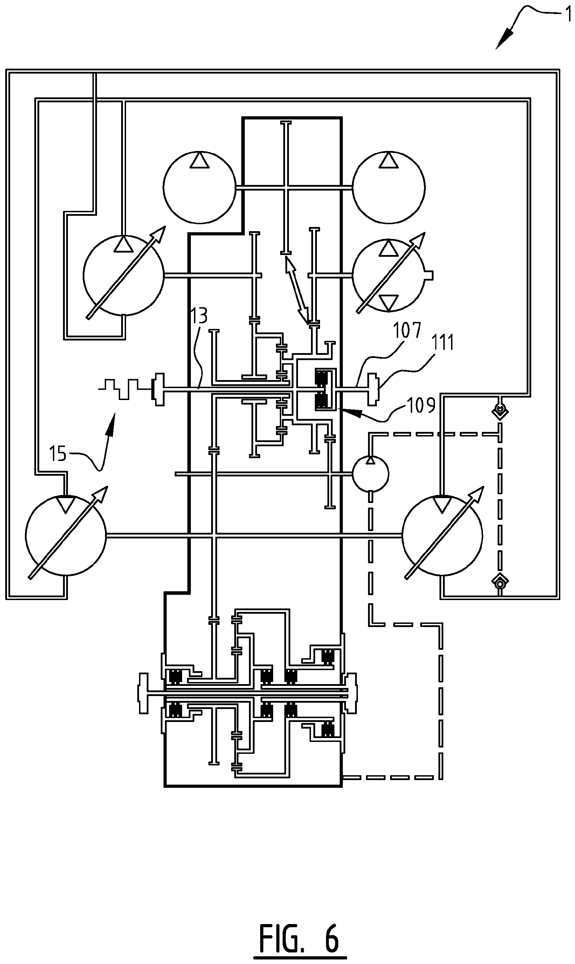

In figure 6 the transmission 1 of figure 5 is shown wherein additionally a power take off shaft 107 is provided that is coupled by means of a clutch 109 to the end of the transmission input shaft 13 opposite of the end of the transmission input shaft 13 to which the external power source 15 is coupled. The power take off shaft 107 extends through the transmission case 3 and is at its externally arranged end provided with a coupling member 111 for mechanically coupling the power take off shaft 107 to an external auxiliary device. Such an auxiliary device is driven by the transmission output shaft 13 when the clutch 109 is in its coupled state, and is not driven when the clutch 109 is in its uncoupled state.

The additional power take off shaft 107 and clutch 109 are modular units that can be added to or removed from the transmission 1 to adapt the transmission 1 to a specific application. Such addition or removal does not require alteration of the mechanical components that are arranged in the transmission case 3 as shown in figure 1.

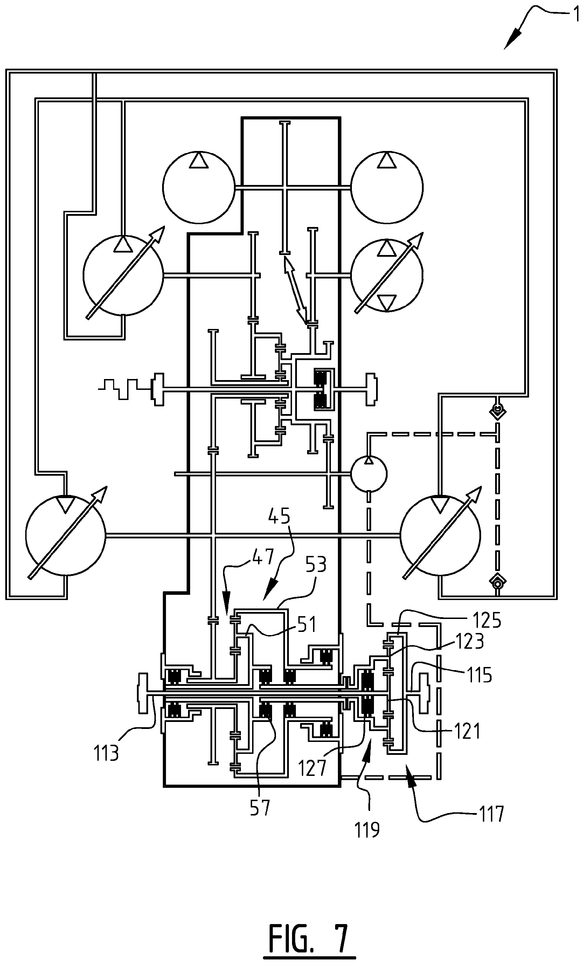

In figure 7 the transmission 1 of figure 6 is shown wherein in stead of a single transmission output shaft, two transmission output shafts are provided, in particular a front transmission output shaft 113 and a rear transmission output shaft 115. The front transmission output shaft 113 and the rear transmission output shaft 115 are coupled to second planetary gear mechanism 47 of the combined stepped gear / directional mechanism 45 via a differential mechanism 117.

The differential mechanism 117 has a third planetary gear mechanism 119. The third planetary gear mechanism 119 has a sun gear 121, a planet gear set 123, and a ring gear 125. The planet gear set 123 of the third planetary gear mechanism 119 is coupled to the planet gear set 51 of the second planetary gear mechanism 47 by means of the first clutch 57. Additionally, the planet gear set 123 of the third planetary gear mechanism 119 is coupled to the ring gear 53 of the second planetary gear mechanism 47 by means of the third clutch 61. The ring gear 125 of the third planetary gear mechanism 119 is directly coupled to the rear transmission output shaft 115. The sun gear 121 of the third planetary gear mechanism 119 is directly coupled to the front transmission output shaft 113. The sun gear 121 of the third planetary gear mechanism 119 is furthermore coupled to the planet gear set 123 of the third planetary gear mechanism 119 by means of fifth clutch 127. With this arrangement of third planetary gear mechanism 119 and fifth clutch 127 the front transmission output shaft 113 and the rear transmission output shaft 115 can be jointly driven. In case the fifth clutch 127 is uncoupled, a rotational speed difference is possible between the front transmission output shaft 113 and the rear transmission output shaft 115. In case the fifth clutch 127 is coupled, the differential mechanism 117 is locked, in that case there is no speed difference possible between the front transmission output shaft 113 and the rear transmission output shaft 115.

The differential mechanism 117 is a separate units that is arranged externally on the transmission case 3. The differential mechanism 117 is a modular unit that can be added to or removed from the transmission 1 to adapt the transmission 1 to a specific application. Such addition or removal does not require alteration of the mechanical components that are arranged in the transmission case 3 as shown in figure 1.

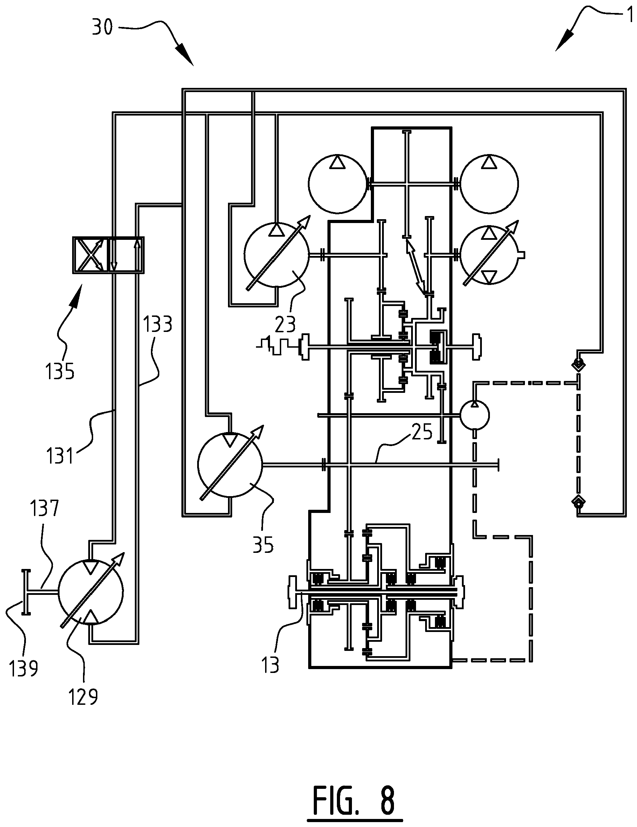

In figure 8 the transmission 1 of figure 7 is shown wherein in stead of two second hydrostats, only one second hydrostat 35 is arranged on the transmission case 3 and coupled to motor input shaft 25. Additionally a third hydrostat 129 is provided that is not arranged on the transmission case 3. As shown by its symbol, the third hydrostat 129 is configured to act as a bidirectional variable displacement motor. The third hydrostat 129 is connected to the first hydrostat 23 via hydraulic lines 131, 133 that are coupled to the hydraulic circuit 30 by means of a directional control valve 135. The third hydrostat 129 thus is hydraulically driven by the first hydrostat 23. The direction of rotation of the third hydrostat 129 can be changed by means of the directional control valve 135. In case the transmission 1 is applied in a vehicle wherein the transmission output shaft 13 is coupled to a driven front axle and a driven rear axle of said vehicle, the third hydrostat 129 can be coupled via motor shaft 137 and coupling member 139 to an additional driven axle of the vehicle. For instance an additional driven axle that is difficult to drive by the transmission output shaft 13 via a mechanical path.

The additional third hydrostat 129 is a separate unit that is arranged externally. The third hydrostat 129 is a modular unit that can be added to or removed from the transmission 1 to adapt the transmission 1 to a specific application. Such addition or removal does not require alteration of the mechanical components that are arranged in the transmission case 3 as shown in figure 1.

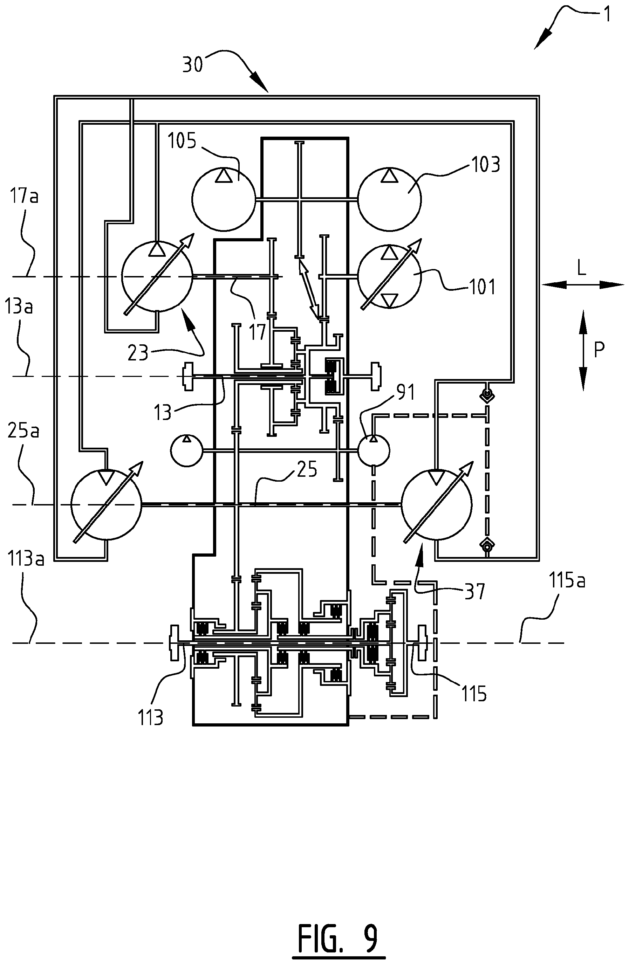

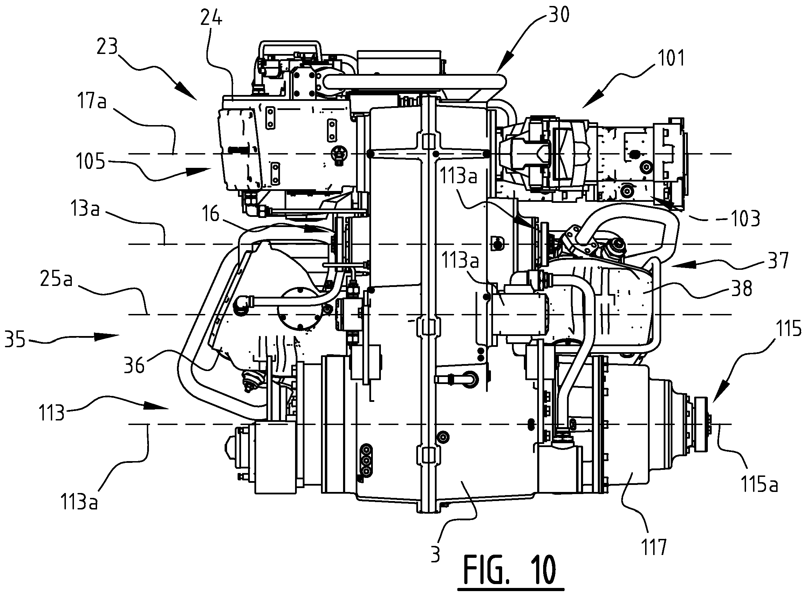

In figure 9 is the transmission 1 of figure 7 is again shown. In particular is shown in figure 10 that the transmission input shaft 13, the pump input shaft 17, the motor output shaft 25, and the transmission output shafts 113 and 115 extend in longitudinal direction L along respective axis 13a, 17a,, 25a, 113a and 115a that are parallel. In a direction P perpendicular to the longitudinal direction L the pump input shaft 17 and the motor output shaft 25 are arranged on opposite sides of the transmission input shafts 113, 115. Furthermore, in said direction P perpendicular to the longitudinal direction L the transmission input shaft 13 and the transmission output shafts 113, 115 are arranged on opposite sides of the motor output shaft 25.

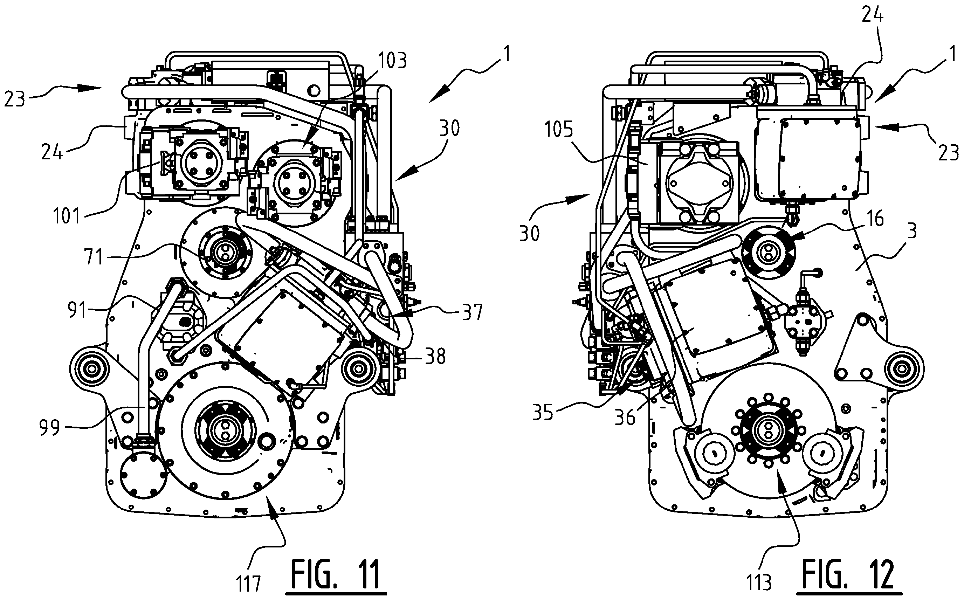

In figures 10, 11, and 12 a side view, front view, and rear view, respectively, is shown of a transmission 1 corresponding to the schematic transmission 1 of figure 9. In these figures it can be clearly seen how the separate hydrostat units 24, 36, 38; auxiliary hydrostat unit 101, 103, 105; and differential mechanism unit are arranged on the transmission casing 3 in an arrangement resulting in a compact transmission 1. Furthermore, it can be clearly seen in figures 10, 11, and 12 that the units arranged externally on the transmission case 3 are easy accessible and thus can easy be maintained or exchanged. The hydrostat units 24, 36, 38, and auxiliary hydrostat units 101, 103, 105, are separate devices each having its own case arranged externally on the transmission case 3. The hydrostat units 24, 36, 38 are connected via a hydraulic circuit 30 that is externally arranged on the transmission case 3. The cases of the hydrostat units 24, 36, 38, and auxiliary hydrostat units 101, 103, 105, are releasable mounted on the transmission case 3, in particular by means of bolts, and can be easily removed from the transmission case 3 to be exchanged. Although in figures 10, 11, and 12 the transmission 1 corresponds to the schematic transmission 1 of figure 9, the transmission 1 of figures 10, 11, and 12, can easily be converted to a transmission corresponding to the schematic transmission 1 of figures 1, 5, 6, 7, and 8, by removal, addition, and/or exchange of the hydrostat units and the differential mechanism unit.

Although the principles of the invention have been set forth above with reference to specific embodiments, it must be understood that this description is given solely by way of example and not as limitation to the scope of protection, which is defined by the appended claims.

## Claims

1. Transmission, comprising: - a transmission case (3); - a first planetary gear mechanism (5) arranged in the transmission case (3) and comprising a sun gear (7), a planet gear set (9), and a ring gear (11); - a transmission input shaft (13) connected to the first planetary gear mechanism (5) and connectable to an external power source (15) for driving the planetary gear mechanism; - at least one transmission output shaft (39) connected to the first planetary gear mechanism and connectable to an external device for driving said external device; **characterized by**: - at least one first hydrostat (23) arranged externally on the transmission case (3) and connected to the first planetary gear mechanism via a pump input shaft (17) and configured to act as a unidirectional variable displacement pump driven by the first planetary gear mechanism; - at least one second hydrostat (35; 37) arranged externally on the transmission case, driven by the first hydrostat, and configured to act as a unidirectional motor and connected to the first planetary gear mechanism via a motor output shaft (25) for driving the first planetary gear mechanism; wherein each of said transmission input shaft (13), the first hydrostat (23) and the second hydrostat (35; 37) is connected to a respective one of said sun gear (7), said planet gear set (9), and said ring gear (11); wherein said transmission output shaft (39) is connected to the one of said sun gear, said planet gear set, and said ring gear to which the second hydrostat (35; 37) is connected; wherein the first hydrostat (23) and the second hydrostat (35; 37) are separate devices each having its own case arranged externally on the transmission case (3), and are connected via a hydraulic circuit that is configured for unidirectional flow of hydraulic oil between the first hydrostat and the second hydrostat.

2. Transmission according to claim 1,
wherein
- the second hydrostat is configured to act as a unidirectional variable displacement motor.

3. Transmission according to claim 1 or 2,
wherein
- the first hydrostat, the second hydrostat, and the hydraulic circuit connecting the first hydrostat and second hydrostat are configured such that in case the first hydrostat is set to maximum displacement volume and the second hydrostat is set to zero displacement volume, the first hydrostat is stopped.

4. Transmission according to claim 1, 2, or 3,
wherein
- the first hydrostat and the second hydrostat are both axial plunger units of the bent axis type.

5. Transmission according to any of claims 1 to 4, wherein
- the first hydrostat and the second hydrostat are both hydraulic motor devices, wherein the first hydrostat is a hydraulic motor device converted to act as a unidirectional variable displacement pump.

6. Transmission according to claim 4 and 5, wherein
- the hydraulic motor device of the first hydrostat is converted to act as a hydraulic pump by setting its initial angle from maximum tilt-angle to minimum tilt-angle.

7. Transmission according to any of the claims 1 to 6, further comprising:
- an electronic hydrostat control system that is configured for determining and adjusting the displacement of each variable displacement hydrostat individually.

8. Transmission according to claim 4 and 7,
wherein
- the hydrostat control system comprises for each variable displacement first and second hydrostat an angle sensor for measuring the tilt-angle of the respective variable displacement first and second hydrostat.

9. Transmission according to any of claims 1 to 8, wherein
- the shafts extend in longitudinal direction, and wherein in a direction perpendicular to the longitudinal direction the pump input shaft and the motor output shaft are arranged on opposite sides of the transmission input shaft.

10. Transmission according to claim 9,
wherein
- the transmission output shaft is connected to the first planetary gear mechanism via the motor output shaft, and wherein in said direction perpendicular to the longitudinal direction the transmission input shaft and the transmission output shaft are arranged on opposite sides of the motor output shaft.

11. Transmission according to any of claims 1 to 10,
wherein
- the transmission output shaft is connected to the first planetary gear mechanism via a directional mechanism for changing the direction of rotation of the transmission output shaft, wherein preferably the directional mechanism is connected to the first planetary gear mechanism via the motor output shaft.

12. Transmission according to any of claims 1 to 11,
wherein
- the transmission output shaft is connected to the first planetary gear mechanism via a stepped gear mechanism configured to provide at least two gear ratios, wherein preferably the stepped gear mechanism is connected to the first planetary gear mechanism via the motor output shaft.

13. Transmission according to claim 12,
wherein
- the transmission is configured to operate in at least two operating ranges, wherein in each operating range, the direction of rotation of the pump input shaft is the same and the direction of rotation of the motor output shaft is the same;
wherein
- for switching between the operating ranges the transmission is configured such that:
- the transmission output shaft is uncoupled from the motor output shaft and the pump input shaft;
- after uncoupling the transmission output shaft from the motor output shaft and the pump input shaft, the stepped gear mechanism is switched from a first gear ratio to a second gear ratio and the displacement of the first hydrostat and the displacement of the second hydrostat is adjusted in order to change the rotational speed of the pump input shaft and the rotational speed of the motor output shaft; and
- after switching the stepped gear mechanism from a first gear ratio to a second gear ratio and adjusting the displacement of each variable displacement hydrostat, the transmission output shaft is again coupled to the motor output shaft and the pump input shaft.

14. Transmission according to claim 11, 12, or 13,
wherein
- the transmission output shaft is connected to the first planetary gear mechanism via a second planetary gear mechanism arranged in the transmission case and at least one clutch; and wherein preferably
- the second planetary gear mechanism comprises a sun gear, a planet gear set, and a ring gear, wherein:
- the sun gear is connected to the first planetary gear mechanism;
- the planet gear set is connected to the transmission output shaft via a first clutch and to the transmission casing via a second clutch; and
- the ring gear is connected to the transmission output shaft via a third clutch and to the transmission casing via a fourth clutch.

15. Transmission according to any of claims 1 to 14, wherein
- the transmission comprises a first transmission output shaft and a second transmission output shaft;
- the first transmission output shaft and the second transmission output shaft are connected to the planetary gear mechanism via a differential gear mechanism, preferably a lockable differential gear mechanism;
and wherein preferably
- the differential gear mechanism comprises a third planetary gear mechanism.

16. Transmission according to claim 15, wherein the differential gear mechanism is arranged externally on the transmission case as a modular unit.

17. Transmission according to any of the claims 1 to 16, further comprising:
- a third hydrostat configured to act as a bidirectional variable displacement motor, which third hydrostat is connected to the first hydrostat via a directional control valve for changing the direction of rotation of the third hydrostat.

18. Transmission according to any of the claims 1 to 17, further comprising at least one auxiliary transmission output shaft connected to the one of the sun gear, the planet gear set, and the ring gear of the first planetary gear mechanism to which the transmission input shaft is connected.

## Patentansprüche

1. Transmission mit: einem Transmissionsgehäuse (3), einem ersten Planetengetriebemechanismus (5), der in dem Transmissionsgehäuse (3) angeordnet ist und ein Sonnenrad (7), einen Planetengetriebesatz (9) und ein Ringgrad 11) aufweist, eine Transmissions-Eingangswelle (13), die mit dem ersten Planetengetriebemechanismus (5) verbunden ist und mit einer externen Antriebsquelle (15) zum Antreiben des Planetengetriebemechanismus verbindbar ist, mindestens einer Transmissions-Ausgangswelle (39), die mit dem ersten Planetengetriebemechanismus verbunden ist und mit einer externen Vorrichtung zum Antreiben der externen Vorrichtung verbindbar ist, **gekennzeichnet durch**: mindestens einen ersten Hydrostaten (23), der extern auf dem Transmissionsgehäuse (3) angeordnet ist und mit dem ersten Planetengetriebemechanismus über eine Pumpen-Eingangswelle (17) verbunden ist und ausgebildet ist, um als eine unidirektionale Verdrängungspumpe zu arbeiten, die von dem ersten Planetengetriebemechanismus angetrieben wird, mindestens einen zweiten Hydrostaten (35, 37), der extern auf dem Transmissionsgehäuse angeordnet ist, von dem ersten Hydrostaten angetrieben wird und ausgebildet ist, um als ein unidirektionaler Motor zu wirken und mit dem ersten Planetengetriebemechanismus über eine Motor-Ausgangswelle (24) verbunden ist, um den ersten Planetengetriebemechanismus anzutreiben, wobei sowohl die Transmissions-Eingangswelle (13), der erste Hydrostat (23) als auch der zweite Hydrostat (35, 37) mit dem Sonnenrad (7), dem Planetengetriebesatz (9 bzw. dem Ringrad (11) verbunden ist, wobei die Transmissions-Ausgangswelle (39) mit einem, dem Sonnenrad, dem Planetengetriebesatz und dem Ringrad, verbunden ist, das mit dem der zweite Hydrostaten (35, 37) verbunden ist, wobei der erste Hydrostat (23) und der zweite Hydrostat (35, 37) getrennte Vorrichtungen sind, die jeweils ihr eigenes Gehäuse aufweisen, das extern auf dem Transmissionsgehäuse (3) angeordnet ist, und über eine Hydraulikschaltung verbunden sind, die für einen unidirektionalen Fluss von Hydrauliköl zwischen dem ersten Hydrostaten und dem zweiten Hydrostaten ausgebildet ist.

2. Transmission nach Anspruch 1,
wobei
der zweite Hydrostat ausgebildet ist, um als ein unidirektionaler variabler Verdrängungsmotor zu arbeiten.

3. Transmission nach Anspruch 1 oder 2,
wobei
der erste Hydrostat, der zweite Hydrostat und die Hydraulikschaltung, die den ersten Hydrostaten und den zweiten Hydrostaten verbindet, so ausgebildet sind, dass für den Fall, dass der erste Hydrostat auf das maximale Verdrängungsvolumen eingestellt ist und der zweite Hydrostat auf Null Verdrängungsvolumen eingestellt ist, der erste Hydrostat angehalten wird.

4. Transmission nach Anspruch 1, 2 oder 3,
wobei
der erste Hydrostat und der zweite Hydrostat beide axiale Kolbeneinheiten von der Bauart mit gebogener Achse sind.

5. Transmission nach einem der Ansprüche 1 bis 4,
wobei
der erste Hydrostat und der zweite Hydrostat beide hydraulische Motorvorrichtungen sind, wobei der erste Hydrostat eine Hydraulikmotorvorrichtung ist, die umgewandelt ist, um als eine unidirektionale variable Verdrängungspumpe zu arbeiten.

6. Transmission nach Anspruch 4 und 5,
wobei
die Hydraulikmotorvorrichtung des ersten Hydrostaten durch Einstellung ihres Anfangswinkels von dem maximalen Neigungswinkel zu dem minimalen Neigungswinkel umgewandelt ist, um als eine Hydraulikpumpe zu arbeiten.

7. Transmission nach einem der Ansprüche 1 bis 6 mit ferner:
einem elektronischen Hydrostaten-Steuersystem, das ausgebildet ist, um die Verdrängung jedes variablen Verdrängungs-Hydrostaten individuell zu bestimmen und einzustellen.

8. Transmission nach einem der Ansprüche 4 und 7,
wobei
das Hydrostaten-Steuersystem für jeden ersten und zweiten Hydrostaten mit variabler Verdrängung einen Winkelsensor zur Messung des Neigungswinkels des jeweiligen ersten und zweiten Hydrostaten mit variabler Verdrängung aufweist.

9. Transmission nach einem der Ansprüche 1 bis 8,
wobei
sich die Wellen in einer Längsrichtung erstrecken und wobei in einer Richtung rechtwinklig zu der Längsrichtung die Pumpen-Eingangswelle und die Pumpen-Ausgangswelle an gegenüberliegenden Seiten der Transmissions-Eingangswelle angeordnet sind.

10. Transmission nach Anspruch 9,
wobei
die Transmissions-Ausgangswelle mit dem ersten Planetengetriebemechanismus über die Motor-Ausgangswelle verbunden ist, wobei in der Richtung rechtwinklig zu der Längsrichtung die Transmissions-Eingangswelle und die Transmissions-Ausgangswelle an gegenüberliegenden Seiten der Motor-Ausgangswelle angeordnet sind.

11. Transmission nach einem der Ansprüche 1 bis 10,
wobei
die Transmissions-Ausgangswelle mit dem ersten Planetengetriebemechanismus über einen Richtungsmechanismus zum Ändern der Drehrichtung der Transmissions-Ausgangswelle verbunden ist, wobei vorzugsweise der Richtungsmechanismus mit dem ersten Planetengetriebemechanismus über die Motor-Ausgangswelle verbunden ist.

12. Transmission nach einem der Ansprüche 1 bis 11,
wobei
die Transmissions-Ausgangswelle mit dem ersten Planetengetriebemechanismus über einen gestuften Getriebemechanismus verbunden ist, der ausgebildet ist, um mindestens zwei Getriebeverhältnisse zu liefern, wobei vorzugsweise der gestufte Getriebemechanismus mit dem ersten Planetengetriebemechanismus über die Motor-Ausgangswelle verbunden ist.

13. Transmission nach Anspruch 12,
wobei
die Transmission ausgebildet ist, um in mindestens zwei Betriebsbereichen zu arbeiten, wobei in jedem Betriebsbereich die Drehrichtung der Pumpen-Eingangswelle dieselbe ist und die Drehrichtung der Motor-Ausgangswelle dieselbe ist,
wobei zum Schalten zwischen den Betriebsbereichen die Transmission so ausgebildet ist, dass die Transmissions-Ausgangswelle von der Motor-Ausgangswelle und der Pumpen-Eingangswelle entkoppelt ist,
nach dem Entkoppeln der Transmissions-Ausgangswelle von der Motor-Ausgangswelle und der Pumpen-Eingangswelle der gestufte Getriebemechanismus von einem ersten Getriebeverhältnis zu einem zweiten Getriebeverhältnis geschaltet wird und die Verdrängung des ersten Hydrostaten und die Verdrängung des zweiten Hydrostaten eingestellt werden, um die Drehgeschwindigkeit der Pumpen-Eingangswelle und die Drehgeschwindigkeit der Pumpen-Ausgangswelle zu ändern und
nach dem Schalten des gestuften Getriebemechanismus von einem ersten Getriebeverhältnis auf ein zweites Getriebeverhältnis und der Einstellung der Verdrängung jedes Hydrostaten mit variabler Verdrängung die Transmissions-Ausgangswelle erneut mit der Motor-Ausgangswelle und der Pumpen-Eingangswelle gekoppelt wird.

14. Transmission nach Anspruch 11, 12 oder 13,
wobei
die Transmissions-Ausgangswelle mit dem ersten Planetengetriebemechanismus über einen zweiten Planetengetriebemechanismus, der in dem Transmissionsgehäuse angeordnet ist, und mindestens eine Kupplung verbunden ist
und wobei vorzugsweise
der zweite Planetengetriebemechanismus ein Sonnenrad, ein Planetenrad und ein Ringrad aufweist, wobei:
das Sonnenrad mit dem ersten Planetengetriebemechanismus verbunden ist,
das Planetenrad mit der Transmissions-Ausgangswelle über eine erste Kupplung und mit dem Transmissionsgehäuse über eine zweite Kupplung verbunden ist und
das Ringrad mit der Transmissions-Ausgangswelle über eine dritte Kupplung und mit dem Transmissionsgehäuse über eine vierte Kupplung verbunden ist.

15. Transmission nach einem der Ansprüche 1 bis 14,
wobei
die Transmission eine erste Transmissions-Ausgangswelle und eine zweite Transmissions-Ausgangswelle aufweist,
die erste Transmissions-Ausgangswelle und die zweite Transmissions-Ausgangswelle mit dem Planetengetriebemechanismus über ein Differenzialgetriebemechanismus, vorzugsweise einen sperrbaren Differenzialgetriebemechanismus, verbunden sind,
wobei vorzugsweise
der Differenzialgetriebemechanismus einen vierten Planetengetriebemechanismus aufweist.

16. Transmission nach Anspruch 15, wobei der Differenzialgetriebemechanismus extern auf dem Transmissionsgehäuse als eine modulare Einheit angeordnet ist.

17. Transmission nach einem der Ansprüche 1 bis 16 mit ferner:
einem dritten Hydrostaten, der ausgebildet ist, um als ein bidirektionaler variabler Verdrängungsmotor zu arbeiten, wobei der dritte Hydrostat mit dem ersten Hydrostaten über ein Richtungssteuerventil zum Ändern der Drehrichtung des dritten Hydrostaten verbunden ist.

18. Transmission nach einem der Ansprüche 1 bis 17 mit ferner mindestens einer Hilfs-Transmissions-Ausgangswelle, die mit einem des Sonnenrades, des Planetengetriebesatzes und des Ringsrades des ersten Planetengetriebemechanismus verbunden ist, mit dem die Transmissions-Eingangswelle verbunden ist.

## Revendications

1. Transmission, comprenant :
un boîtier de transmission (3) ;
un premier mécanisme à engrenage planétaire (5) agencé dans le boîtier de transmission (3) et comprenant une roue solaire (7), un jeu d'engrenages épicycloïdaux (9) et une couronne d'engrenage (11) ; un arbre d'entrée de transmission (13) relié au premier mécanisme à engrenage planétaire (5) et pouvant être relié à une source d'énergie externe (15) de manière à entraîner le mécanisme à engrenage planétaire ; au moins un arbre de sortie de transmission (39) relié au premier mécanisme à engrenage planétaire et pouvant être relié à un dispositif externe de manière à entraîner ledit dispositif externe ; **caractérisée par** : au moins un premier composant hydrostatique (23) agencé de manière externe sur le boîtier de transmission (3) et raccordé au premier mécanisme à engrenage planétaire par l'intermédiaire d'un arbre d'entrée de pompe (17) et configuré de manière à fonctionner en pompe à cylindrée variable unidirectionnelle entraînée par le premier mécanisme à engrenage planétaire ; au moins un deuxième composant hydrostatique (35 ; 37) agencé de manière externe sur le boîtier de transmission, entraîné par le premier composant hydrostatique, et configuré de manière à fonctionner en moteur unidirectionnel et relié au premier mécanisme à engrenage planétaire par l'intermédiaire d'un arbre de sortie de moteur (25) de manière à entraîner le premier mécanisme à engrenage planétaire ; dans laquelle chacun dudit arbre d'entrée de transmission (13), du premier composant hydrostatique (23) et du deuxième composant hydrostatique (35 ; 37) est relié à l'un respectif de ladite roue solaire (7), dudit jeu d'engrenages épicycloïdaux (9) et de ladite couronne d'engrenage (11) ; dans laquelle ledit arbre de sortie de transmission (39) est relié à l'un de ladite roue solaire, dudit jeu d'engrenages épicycloïdaux et de ladite couronne d'engrenage auquel le deuxième composant hydrostatique (35 ; 37) est relié ; dans laquelle le premier composant hydrostatique (23) et le deuxième composant hydrostatique (35 ; 37) sont des dispositifs distincts comportant chacun leur propre boîtier agencé de manière externe sur le boîtier de transmission (3), et sont raccordés par l'intermédiaire d'un circuit hydraulique qui est configuré afin de faire circuler de manière unidirectionnelle de l'huile hydraulique entre le premier composant hydrostatique et le deuxième composant hydrostatique.

2. Transmission selon la revendication 1, dans laquelle
le deuxième composant hydrostatique est configuré de manière à fonctionner en moteur à cylindrée variable unidirectionnel.

3. Transmission selon la revendication 1 ou 2, dans laquelle
le premier composant hydrostatique, le deuxième composant hydrostatique et le circuit hydraulique raccordant le premier composant hydrostatique et le deuxième composant hydrostatique sont configurés de telle sorte que, dans le cas où le premier composant hydrostatique est réglé à une cylindrée maximum et le deuxième composant hydrostatique est réglé à une cylindrée nulle, le premier composant hydrostatique est arrêté.

4. Transmission selon la revendication 1, 2, ou 3, dans laquelle
le premier composant hydrostatique et le deuxième composant hydrostatique sont tous les deux des unités à pistons axiaux du type à axe incliné.

5. Transmission selon l'une quelconque des revendications 1 à 4, dans laquelle
le premier composant hydrostatique et le deuxième composant hydrostatique sont tous deux des dispositifs formant moteur hydraulique, dans laquelle le premier composant hydrostatique est un dispositif formant moteur hydraulique transformé de manière à fonctionner en pompe à cylindrée variable unidirectionnelle.

6. Transmission selon la revendication 4 et 5, dans laquelle
le dispositif formant moteur hydraulique du premier composant hydrostatique est transformé de manière à fonctionner en pompe hydraulique en positionnant son angle initial d'un angle de basculement maximum à un angle de basculement minimum.

7. Transmission selon l'une quelconque des revendications 1 à 6, comprenant, en outre :
un dispositif de commande de composant hydrostatique électronique qui est configuré de manière à déterminer et régler individuellement la cylindrée de chaque composant hydrostatique à cylindrée variable.

8. Transmission selon les revendications 4 et 7, dans laquelle
le dispositif de commande de composant hydrostatique comprend, pour chacun des premier et deuxième composants hydrostatiques à cylindrée variable, un capteur d'angle destiné à mesurer l'angle de basculement des premier et deuxième composants hydrostatiques à cylindrée variable respectifs.

9. Transmission selon l'une quelconque des revendications 1 à 8, dans laquelle
les arbres s'étendent dans la direction longitudinale et dans laquelle, dans une direction perpendiculaire à la direction longitudinale, l'arbre d'entrée de pompe et l'arbre de sortie de moteur sont agencés sur des côtés opposés de l'arbre d'entrée de transmission.

10. Transmission selon la revendication 9, dans laquelle
l'arbre de sortie de transmission est relié au premier mécanisme à engrenage planétaire par l'intermédiaire de l'arbre de sortie de moteur, et dans laquelle, dans ladite direction perpendiculaire à la direction longitudinale, l'arbre d'entrée de transmission et l'arbre de sortie de transmission sont agencés sur des côtés opposés de l'arbre de sortie de moteur.

11. Transmission selon l'une quelconque des revendications 1 à 10, dans laquelle
l'arbre de sortie de transmission est relié au premier mécanisme à engrenage planétaire par l'intermédiaire d'un mécanisme directionnel destiné à modifier le sens de rotation de l'arbre de sortie de transmission, dans laquelle, de préférence, le mécanisme directionnel est relié au premier mécanisme à engrenage planétaire par l'intermédiaire de l'arbre de sortie de moteur.

12. Transmission selon l'une quelconque des revendications 1 à 11, dans laquelle
l'arbre de sortie de transmission est relié au premier mécanisme à engrenage planétaire par l'intermédiaire d'un mécanisme à engrenage étagé configuré de manière à assurer au moins deux rapports d'engrenage, dans laquelle, de préférence, le mécanisme à engrenage étagé est relié au premier mécanisme à engrenage planétaire par l'intermédiaire de l'arbre de sortie de moteur.

13. Transmission selon la revendication 12, dans laquelle
la transmission est configurée de manière à fonctionner sur au moins deux plages de fonctionnement, dans laquelle, dans chaque plage de fonctionnement, le sens de rotation de l'arbre d'entrée de pompe est identique et le sens de rotation de l'arbre de sortie de moteur est identique ;
dans laquelle
pour assurer la commutation entre les plages de fonctionnement, la transmission est configurée de telle sorte que :
l'arbre de sortie de transmission est découplé de l'arbre de sortie de moteur et de l'arbre d'entrée de pompe ;
après découplage de l'arbre de sortie de transmission par rapport à l'arbre de sortie de moteur et l'arbre d'entrée de pompe, le mécanisme à engrenage étagé est commuté à partir d'un premier rapport d'engrenage vers un second rapport d'engrenage et la cylindrée du premier composant hydrostatique et la cylindrée du deuxième composant hydrostatique sont ajustées afin de modifier la vitesse de rotation de l'arbre d'entrée de pompe et la vitesse de rotation de l'arbre de sortie de moteur ; et
après commutation du mécanisme à engrenage étagé à partir d'un premier rapport d'engrenage vers un second rapport d'engrenage et réglage de la cylindrée de chaque composant hydrostatique à cylindrée variable, l'arbre de sortie de transmission est de nouveau couplé à l'arbre de sortie de moteur et à l'arbre d'entrée de pompe.

14. Transmission selon la revendication 11, 12, ou 13, dans laquelle
l'arbre de sortie de transmission est relié au premier mécanisme à engrenage planétaire par l'intermédiaire d'un second mécanisme à engrenage planétaire agencé dans le boîtier de transmission et au moins un embrayage ; et dans laquelle, de préférence,
le second mécanisme à engrenage planétaire comprend une roue solaire, un jeu d'engrenages épicycloïdaux, et une couronne d'engrenage, dans laquelle :
la roue solaire est reliée au premier mécanisme à engrenage planétaire ;
le jeu d'engrenages épicycloïdaux est relié à l'arbre de sortie de transmission par l'intermédiaire d'un premier embrayage et au boîtier de transmission par l'intermédiaire d'un deuxième embrayage ; et
la couronne d'engrenage est reliée à l'arbre de sortie de transmission par l'intermédiaire d'un troisième embrayage et au boîtier de transmission par l'intermédiaire d'un quatrième embrayage.

15. Transmission selon l'une quelconque des revendications 1 à 14, dans laquelle
la transmission comprend un premier arbre de sortie de transmission et un second arbre de sortie de transmission ;
le premier arbre de sortie de transmission et le second arbre de sortie de transmission sont reliés au mécanisme à engrenage planétaire par l'intermédiaire d'un mécanisme à engrenage différentiel, de préférence, un mécanisme à engrenage différentiel pouvant être verrouillé ;
et dans laquelle, de préférence,
le mécanisme à engrenage différentiel comprend un troisième mécanisme à engrenage planétaire.

16. Transmission selon la revendication 15, dans laquelle le mécanisme à engrenage différentiel est agencé de manière externe sur le boîtier de transmission comme une unité modulaire.

17. Transmission selon l'une quelconque des revendications 1 à 16, comprenant, en outre:
un troisième composant hydrostatique configuré de manière à fonctionner en moteur à cylindrée variable bidirectionnel, lequel troisième composant hydrostatique est relié au premier composant hydrostatique par l'intermédiaire d'une vanne de commande directionnelle destinée à modifier le sens de rotation du troisième composant hydrostatique.

18. Transmission selon l'une quelconque des revendications 1 à 17, comprenant, en outre, au moins un arbre de sortie de transmission auxiliaire relié à l'un de la roue solaire, du jeu d'engrenages épicycloïdaux et de la couronne d'engrenage du premier mécanisme à engrenage planétaire auquel l'arbre d'entrée de transmission est relié.
